# EUROPÄISCHE PATENTSCHRIFT

(11) **EP 2 056 440 B1**
(45) Veröffentlichungstag und Bekanntmachung des Hinweises auf die Patenterteilung: **07.03.2018**
(21) Anmeldenummer: 08166167.0
(22) Anmeldetag: 09.10.2008
(51) Int. Cl.: H02M 3/335

(54) **Verfahren zum Betreiben eines Schaltnetzteils**
Method for operating a switching power supply
Procédé destiné au fonctionnement d'un bloc à découpage

(30) Priorität: 31.10.2007 AT 17672007
(43) Veröffentlichungstag der Anmeldung: 06.05.2009
(73) Patentinhaber: Siemens Aktiengesellschaft, 80333 München (DE)
(72) Erfinder: Juran, Dietrich, 2483 Ebreichsdorf (AT); Eichhorner, Bernhard, 1210 Wien (AT)
(74) Vertreter: Maier, Daniel Oliver

(56) Entgegenhaltungen:
- EP-A1- 0 498 917
- EP-A1- 0 657 987
- DE-A1- 19 524 963
- ERISMAN B P ET AL: "A novel primary-side controller and an error signal isolator in low cost five-pin packages", PROCEEDINGS OF THE ANNUAL APPLIED POWER ELECTRONICS CONFERENCE AND EXPOSITION (APEC). SAN DIEGO, MAR. 7 - 11, 1993; [PROCEEDINGS OF THE ANNUAL APPLIED POWER ELECTRONICS CONFERENCE AND EXPOSITION (APEC)], NEW YORK, IEEE, US, Bd. CONF. 8, 7. März 1993 (1993-03-07), Seiten 369-379, XP010111259, DOI: 10.1109/APEC.1993.290687 ISBN: 978-0-7803-0983-8

## Beschreibung

Die Erfindung betrifft ein Verfahren zum Betreiben eines Schaltnetzteils, welches eine Last mit einem Stromnetz verbindet und einen Durchflusswandler umfasst, welcher mit netzseitiger Laststromerfassung nach dem Current-Mode-Prinzip mit einer variablen Schaltfrequenz angesteuert wird. Des Weiteren betrifft die Erfindung ein Schaltnetzteil zur Durchführung des Verfahrens.

Schaltnetzteile sind seit langem bekannt und werden zur Anbindung einer Last an ein Stromnetz benutzt. Im Betrieb von Schaltnetzteilen kann es infolge von Lastströmen, welche höher als die für das jeweilige Gerät spezifischen Nennwerte sind, zu einer Überlastung kommen. Ohne entsprechende Schutzmaßnahmen führt eine derartige Überlastung in der Regel zur Zerstörung einzelner Beuteile oder des ganzen Geräts. Dabei können Überlasten bereits beim Einschalten eines Schaltnetzteils auftreten, da die üblicherweise ausgangsseitig vorhandenen Kondensatoren theoretisch unbegrenzt hohe Ladeströme aufnehmen.

Schaltnetzteile sind in der Regel Bestandteile größerer Anlagen. Deshalb wird oft zum Schutz einer Anlage vor möglichen Ausfällen verlangt, dass die Lastströme durch geeignete Maßnahmen wirksam begrenzt werden. Zur Erhöhung der Betriebssicherheit werden deshalb Schaltnetzteile meistens mit strombegrenzend wirkenden Schaltungsteilen ausgestattet. Allerdings bringen diese Maßnahmen in der Regel eine Verschlechterung des Wirkungsgrads und der Leistungsdichte sowie eine Verteuerung des Gerätes mit sich.

Strombegrenzend wirkende Schaltungen bei gegebenenfalls netztrennenden Schaltnetzteilen werden wirkungsgradbedingt zumeist als taktende Stromregelschaltungen realisiert. Die Messung der Lastströme kann dazu entweder lastseitig oder netzseitig erfolgen. Der Regeleingriff erfolgt dabei üblicherweise netzseitig durch geeignete Beeinflussung eines mittels einer Steuerung generierten Pulsweitenmodulationssignals zur Ansteuerung primärer Schalttransistoren.

Die lastseitige Messung ermöglicht gegenüber der netzseitigen Messung eine höhere Genauigkeit der Regelung, bedingt jedoch unter anderem höheren Schaltungsaufwand. Die netzseitige Messung wird bei modernen Schaltnetzteilkonzepten als sogenanntes Current-Mode-Prinzip realisiert. Die gegenüber der lastseitigen Messung verminderte Genauigkeit rührt daher, dass sich der Laststrom nur indirekt netzseitig abbilden lässt. Dies gilt speziell dann, wenn der Wandler des Schaltnetzteils als Durchflusswandler ausgebildet ist.

Der Erfindung liegt die Aufgabe zugrunde, für ein Verfahren der eingangs genannten Art eine Verbesserung gegenüber dem Stand der Technik anzugeben sowie ein Schaltnetzteil zur Durchführung eines verbesserten Verfahrens vorzustellen.

Erfindungsgemäß wird diese Aufgabe gelöst durch ein Verfahren gemäß Anspruch 1 und ein Schaltnetzteil gemäß Anspruch 4.

Dabei wird eine aktuelle Lastspannung netzseitig nachgebildet, indem die an einer Primärwicklung des Durchflusswandlers während einer Sperrphase eines primärseitigen Schaltelements anliegende Spannung gemittelt wird. In weiterer Folge wird die Schaltfrequenz abgesenkt, wenn die zur gemittelten Spannung proportionale Lastspannung unter einen vorgegebenen Grenzwert absinkt. Die abgesenkte Schaltfrequenz bewirkt im Überlastbereich bei Erreichung des vorgegebenen Grenzwertes eine Absenkung der Lastspannung bei begrenztem Laststrom. Damit ist auch im Überlastbereich, insbesondere im Kurzschlussfall, ein ausreichender Geräteschutz gegeben.

Die Erfassung der Lastspannung erfolgt demnach in einfacher Weise netzseitig durch Mittelwertbildung der in der Sperrphase des primärseitigen Schaltelements auftretenden Spannung an einer Primärwicklung. Es ist daher keine aufwendige lastseitige Schaltung zur effektiven Laststrombegrenzung erforderlich.

Die Strombegrenzung des Laststromes erfolgt hinreichend genau mit gegenüber einer lastseitigen Messung reduziertem Aufwand und besserem Wirkungsgrad.

In einer vorteilhaften Ausprägung der Erfindung weist der Durchflusswandler eine primärseitige Hilfswicklung auf und die netzseitige Nachbildung der Lastspannung erfolgt durch Mittelwertbildung der während der Sperrphase des Schaltelements an dieser Hilfswicklung anliegenden Spannung. Dabei ist das Bezugspotenzial der an der Hilfswicklung anliegenden Spannung weitgehend frei wählbar, sodass eine optimale Anpassung an eine nachgeordnete Auswerteeinrichtung möglich ist.

Im Gegensatz zur direkten Messung der Spannung am Schaltelement während einer Sperrphase lässt sich damit wiederum der Aufwand reduzieren und der Wirkungsgrad steigern.

Zudem ist es vorteilhaft, wenn das Regelsignal einer Spannungsregelung des Durchflusswandlers einer Detektorschaltung zugeführt wird und wenn mittels Detektorschaltung die Absenkung der Schaltfrequenz im Spannungsregelfall unterdrückt wird. Die Detektorschaltung bewirkt somit, dass die Schaltfrequenz nur dann abgesenkt wird, wenn das Schaltnetzteil im ausgeregelten Überlastbereich betrieben wird und kein Spannungsregelfall mehr vorliegt.

Damit sind Probleme, die speziell im Leerlauffall mit sinkendem Mittelwert der Spannung in der Sperrphase auftreten können, ausgeschlossen.

Der Durchflusswandler eines erfindungsgemäßen Schaltnetzteils umfasst einen Transformator mit zumindest einer Primärwicklung und zumindest ein primärseitiges Schaltelement, wobei das Schaltelement mit einer Steuerung verbunden ist. Dabei ist das Schaltnetzteil zur Durchführung des erfindungsgemäßen Verfahrens in der Weise eingereicht, dass zur netzseitigen Nachbildung einer aktuellen Lastspannung die an der Primärwicklung des Transformators während einer Sperrphase des Schaltelements anliegende Spannung einer Einrichtung zur Mittelwertbildung zugeführt ist und dass ein Signal proportional der gemittelten Spannung einer Auswerteeinrichtung zur Anpassung der Schaltfrequenz zugeführt ist.

In einer vorteilhaften Ausprägung weist der Transformator eine primärseitige Hauptwicklung und eine primärseitige Hilfswicklung auf und die an der Hilfswicklung während einer Sperrphase des Schaltelements anliegende Spannung ist der Einrichtung zur Mittelwertbildung zugeführt.

Dabei ist es günstig, wenn ein Wicklungsende der Hilfswicklung mit einem Masseanschluss des Schaltnetzteils verbunden ist. Die gemittelte Spannung liegt dann auf demselben Bezugspotenzial wie die nachgeschaltete Auswerteeinrichtung zur Anpassung der Schaltfrequenz.

Es kann jedoch auch günstig sein, wenn ein Wicklungsende der Hilfswicklung mit dem positiven Pol einer Hilfsspannung verbunden ist und wenn der negative Pol der Hilfsspannung mit einem Masseanschluss des Schaltnetzteils verbunden ist und wenn des Weiteren ein Pegelumsetzer angeordnet ist, welcher die an der Hilfswicklung anliegende Spannung auf das Potenzial des Masseanschlusses umsetzt.

Des Weiteren ist es vorteilhaft, wenn die Steuerung einen Pulsbreitenmodulator umfasst, welcher einen Oszillatoreingang aufweist und wenn dieser Oszillatoreingang mit dem Ausgangssignal der Auswerteeinrichtung zur Anpassung der Schaltfrequenz beaufschlagt ist und dass die Auswerteeinrichtung zur Anpassung der Schaltfrequenz über eine Detektorschaltung zur Erkennung eines Spannungsregelfalls mit der Einrichtung zur Mittelwertbildung verbunden ist. Auf diese Weise ist eine einfache Anordnung angegeben, welche eine Unterdrückung der Frequenzreduktion im Spannungsregelfall sicherstellt.

In einer besonders einfachen Ausprägung sind die Einrichtung zur Mittelwertbildung und die Auswerteeinrichtung zur Anpassung der Schaltfrequenz als analoge Schaltungen ausgebildet.

Alternativ dazu kann es vorteilhaft sein, wenn die Einrichtung zur Mittelwertbildung und die Auswerteeinrichtung zur Anpassung der Schaltfrequenz einen digitalen Controller umfassen. Das ist beispielweise dann der Fall, wenn das Schaltnetzteil ohnedies einen digitaler Controller umfasst.

Die Erfindung wird nachfolgend in beispielhafter Weise unter Bezugnahme auf die beigefügten Figuren erläutert. Es zeigen in schematischer Darstellung:
- Fig. 1: Schaltungsanordnung in analoger Schaltungstechnik
- Fig. 2: Schaltungsanordnung in analoger Schaltungstechnik mit einer auf einer Hilfsspannung aufgesetzten Hilfswicklung.

- Fig. 3: Schaltungsanordnung mit digitalem Controller

In den Figuren sind der Übersichtlichkeit halber nur die zur Beschreibung der vorliegenden Erfindung notwendigen Elemente des Schaltnetzteils dargestellt. Das sind der Transformator T1 mit der primärseitigen Hauptwicklung W_PR, der primärseitigen Hilfswicklung W_H und der Sekundärwicklung W_SEK sowie der Ausgang eines Spannungsreglers.

Nicht dargestellt sind das zumindest eine primärseitige Schaltelement, welches an die primärseitige Hauptwicklung W_PR angeschlossen ist sowie eine ausgangsseitige Last, welche an die Sekundärwicklung W_SEK indirekt, mittels der bei Durchflusswandlers üblichen Komponenten wie Gleichrichterdioden, Speicherdrosseln etc. angeschlossen ist.

Am Ausgang des Spannungsreglers liegt in bekannter Weise ein Regelsignal U_REG an. Dieses wird in der Regel mittels einer sekundärseitigen Spannungsregelungsschaltung und einem Optokoppler als Übertragungselement aus einer Hilfsspannung abgeleitet. Das Regelsignal U_REG ist dabei im Spannungsregelfall wesentlich kleiner als eine primärseitige Hilfsspannung U_1, welche beispielsweise aus einer Zwischenkreisspannung des Schaltnetzteils abgeleitet ist, und erreicht nur im Stromregelfall den Wert dieser Hilfsspannung U_1.

Des Weiteren ist ein Masseanschluss GND des Schaltnetzteils dargestellt. Ein Ausgabesignal U_RC der Schaltung ist einem Oszillatoreingang eines nicht dargestellten Pulsbreitenmodulators zur Ansteuerung des zumindest einen primärseitigen Schaltelements des Durchflusswandlers zugeführt.

Die Einrichtung zur Mittelwertbildung 1 umfasst vier Widerstände R1, R2, R3, R4, eine Diode D1, eine Zenerdiode D2 sowie einen ersten Kondensator C1. Dabei ist ein erstes Wicklungsende der Hilfswicklung W_H mit dem Masseanschluss GND des Schaltnetzteils verbunden. Ein zweites Wicklungsende ist an die Anode der Diode D1 geschaltet, wobei die Kathode der Diode D1 über den ersten Widerstand R1 mit der Kathode der Zenerdiode D2 verbunden ist. Zwischen dem Masseanschluss GND und einem Verbindungspunkt zwischen erstem Widerstand R1 und Zenerdiode D2 ist eine Reihenschaltung aus erstem Kondensator C1 und drittem Widerstand R3 geschaltet, wobei parallel zum ersten Kondensator C1 der zweite Widerstand R2 angeordnet ist. Die Anode der Zeneridode D2 ist über einen vierten Widerstand R4 mit der nachgeschalteten Auswerteeinrichtung 2 zur Anpassung der Schaltfrequenz verbunden.

Der vierte Widerstand R4 bildet mit einem fünften Widerstand R5 einen Spannungsteiler gegenüber dem Masseanschluss GND. Die zwischen viertem Widerstand R4 und fünftem Widerstand R5 abgreifbare Spannung liegt am Basisanschluss eines NPN-Transistors Q1 an. Der Emitteranschluss dieses NPN-Transistors Q1 ist über einen sechsten Widerstand R6 mit dem Masseanschluss GND verbunden. Der Kollektoranschluss des NPN-Transistors Q1 ist in Reihe mit einem siebenten Widerstand R7 und einen achten Widerstand R8 an die primärseitige Hilfsspannung U_1 geschaltet.

Die zwischen siebenten Widerstand R7 und achtem Widerstand R8 abgreifbare Spannung liegt dabei am Basisanschluss eines ersten PNP-Transistors Q2 an. Der Emitteranschluss dieses ersten PNP-Transistors Q2 ist über einen neunten Widerstand R9 an die primärseitige Hilfsspannung U_1 geschaltet und der Kollektoranschluss ist über einen zehnten Widerstand R10 mit einem ersten Anschluss eines zweiten Kondensators C2 verbunden. Der zweite Anschluss dieses zweiten Kondensators C2 ist mit dem Masseanschluss GND verbunden, sodass am zweiten Kondensator C2 das Ausgabesignal U_RC der Schaltung anliegt. Zudem ist der erste Anschluss des zweiten Kondensators C2 über einen elften Widerstands R11 mit der primärseitigen Hilfsspannung U_1 verbunden.

Die Festlegung der Widerstandswerte für die Widerstände R1-R11 erfolgt dabei in geeigneter Weise, sodass sich mit sinkender gemittelter Spannung an der Hilfswicklung W_H während einer Sperrphase ein sinkendes Ausgabesignal U_RC und damit eine reduzierte Schaltfrequenz einstellt.

Dabei wird die in der Hilfswicklung W_H des Transformators T1 induzierte Spannung mittels der in der Sperrphase des Schaltelements leitenden Diode D1 auf die Schaltung bestehend aus erstem Widerstand R1, zweitem Widerstand R2 und erstem Kondensator C1 zur Mittelwertbildung durchgeschaltet. Mittels Zenerdiode D2 erfolgt in der Weise eine Schwellwertbildung, dass bei sinkendem Spannungsmittelwert unterhalb der Durchbruchspannung der Zenerdiode D2 als vorgegebenem Grenzwert keine Ansteuerung des NPN-Transistors Q1 erfolgt. In weiterer Folge wird auch der erste PNP-Transistor Q2 nicht mehr angesteuert und es fließt kein Strom durch den zehnten Widerstand R10. Die Aufladung des frequenzbestimmenden zweiten Kondensators C2 kann somit nur mehr über den elften Widerstand R11 erfolgen. Die resultierende Schaltfrequenz des Pulsbreitenmodulators und somit auch die mittels Transformator T1 an die Last übertragene Leistung werden dadurch reduziert.

Zur Ausblendung der Frequenzreduktion im Spannungsregelfall ist eine Detektorschaltung 3 dargestellt. Diese besteht aus einem zweiten PNP-Transistor Q3 und einem Spannungsteiler, bestehend aus zwei Widerständen R12, R13. Das Regelsignal U_REG liegt über den einen Widerstand R12 am Basisanschluss eines zweiten PNP-Transistors Q3 an, wobei der andere Widerstand R13 als üblicherweise verwendeter Ableitwiderstand zur Verbesserung des Sperrverhaltens des zweiten PNP-Transistors Q3 dient. Dabei ist der Emitteranschluss des zweiten PNP-Transistors Q3 mit der primärseitigen Hilfsspannung U_1 und der Kollektoranschluss über einen vierzehnten Widerstand R14 mit dem Basisanschluss des NPN-Transistors Q1 verbunden.

Das Regelsignal U_REG des Spannungsreglers des Schaltnetzteils wirkt im dargestellten Beispiel derart, dass im Spannungsbegrenzungsfall das Regelsignal U_REG etwa auf Höhe des Potenzials der primärseitigen Hilfsspannung U_1 ansteigt. Damit sperrt der zweite PNP-Transistor Q3, wodurch die Frequenzabsenkung bei sinkender Lastspannung erfolgen kann. Im Spannungsregelfall ist das Regelsignal U_REG kleiner als die primärseitige Hilfsspannung U_1, wodurch der zweite PNP-Transistor Q3 angesteuert wird und weiters der NPN-Transistor Q1 und der erste PNP-Transistor Q2 leitend geschaltet werden. Die Schaltfrequenz des Pulsbreitenmodulators steigt somit auf den Maximalwert an.

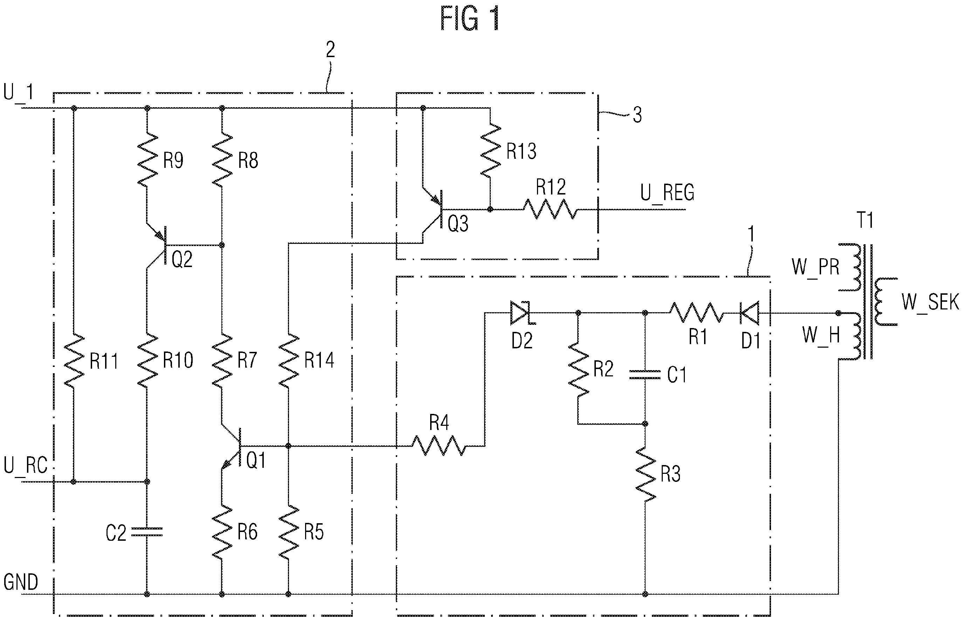

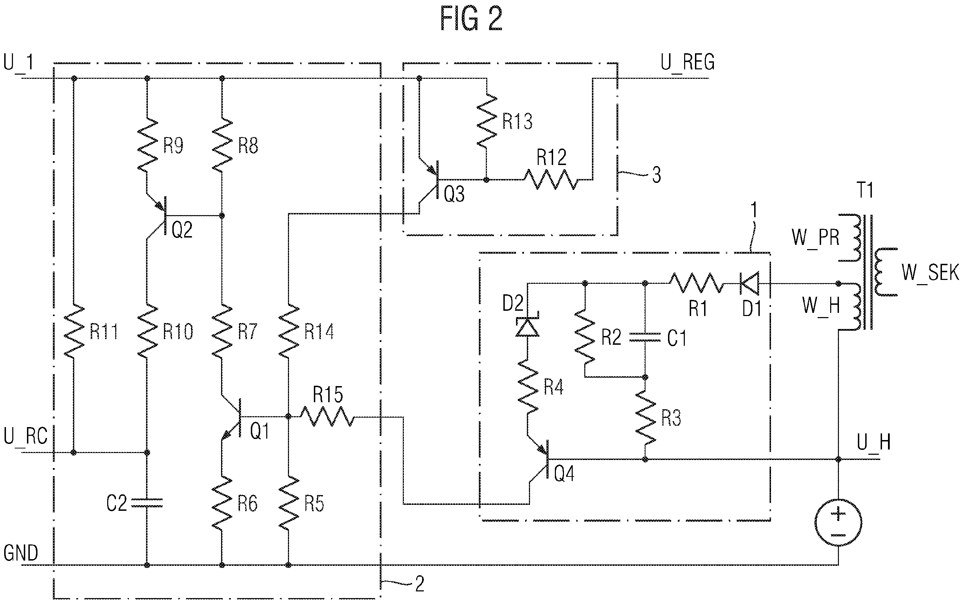

Die in Figur 2 dargestellte Schaltung entspricht bis auf die Einrichtung zur Mittelwertbildung der Schaltung in Figur 1. In diesem zweiten Ausführungsbeispiel ist das Potenzial des ersten Wicklungsendes der Hilfswicklung W_H auf eine positive Hilfsspannung U_H aufgesetzt. Um die gemittelte Spannung wieder auf das niedrigere Potenzial der Auswerteeinrichtung 2 zur Anpassung der Schaltfrequenz umzusetzen ist ein Pegelumsetzer (Levelshifter) vorgesehen. Dieser Pegelumsetzer besteht aus einem weiteren PNP-Transistor Q4 und einem weiteren Widerstand R15.

Am Basisanschluss des weiteren PNP-Transistors Q4 liegt die positive Hilfsspannung U_H an. Der Emitteranschluss ist über den vierten Widerstand R4 mit der Anode der Zenerdiode D2 verbunden und der Kollektoranschluss ist über den weiteren Widerstand R15 mit dem Basisanschluss des NPN-Transistors Q1 verbunden.

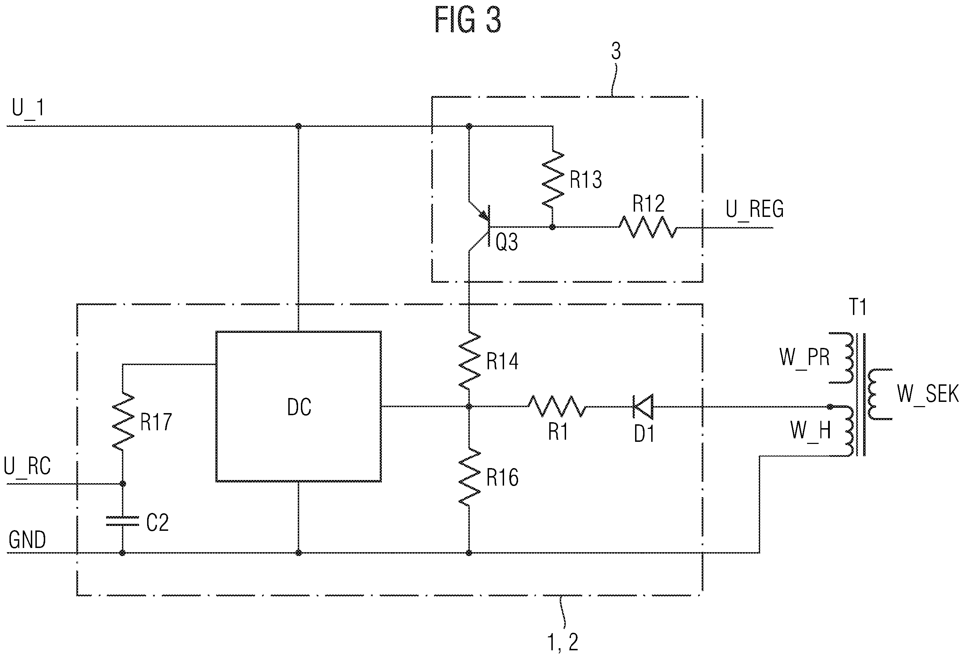

In Figur 3 ist ein drittes Ausführungsbeispiel mit einem digitalen Controller DC dargestellt. Der Aufbau der Einrichtung 1 zur Mittelwertbildung und der Auswerteeinrichtung 2 zur Anpassung der Schaltfrequenz vereinfacht sich dadurch. Der digitale Controller DC ist zur Versorgung an die primärseitige Hilfsspannung U_1 angeschlossen. Die Spannung an der Hilfswicklung W_H wird dem Digitalen Controller DC über die erste Diode D1 und den ersten Widerstand R1 zugeführt, wobei das Spannungsniveau an diesem Eingang des Digitalen Controllers DC über einen weiteren Widerstand R16 gegenüber dem Masseanschluss GND festgelegt ist.

Ein Ausgang des Digitalen Controllers DC ist über einen weiteren Widerstand R17 an den ersten Anschluss des zweiten Kondensators C2 geschaltet, an welchem das Ausgabesignal U_RC der Schaltung abgreifbar ist.

Die Bereitstellung des zur Beeinflussung der Frequenz am Oszillatoreingang des Pulsbreitenmodulators erforderlichen Ladestromes des zweiten Kondensators C2 erfolgt dabei durch geeignete Programmalgorithmen. Ebenso wird die Mittelwertbildung und Schwellwertberechnung von diesem Programm durchgeführt. Das Regelsignal U_REG des Spannungsreglers des Schaltnetzteils sperrt im Strombegrenzungsfall den zweiten PNP-Transistor Q3, wodurch die Frequenzabsenkung bei sinkender Lastspannung erfolgten kann.

In einer weiteren Ausführungsform ist ein Digitaler Controller DC vorgesehen, welcher auch den Pulsbreitenmodulator umfasst. Der Digitale Controller DC steuert dann direkt das zumindest eine primärseitige Schaltelement des Schaltnetzteils an.

## Patentansprüche

1. Verfahren zum Betreiben eines Schaltnetzteils, welches eine Last mit einem Stromnetz verbindet und einen Durchflusswandler umfasst, welcher mit netzseitiger Laststromerfassung nach dem Current-Mode-Prinzip mit einer variablen Schaltfrequenz angesteuert wird, **dadurch gekennzeichnet, dass** eine aktuelle Lastspannung netzseitig nachgebildet wird, indem die an einer Primärwicklung (W_PR bzw. W_H) des Durchflusswandlers während einer Sperrphase eines primärseitigen Schaltelements anliegende Spannung gemittelt wird, und dass die Schaltfrequenz abgesenkt wird, wenn die zur gemittelten Spannung proportionale Lastspannung unter einen vorgegebenen Grenzwert absinkt.

2. Verfahren nach Anspruch 1, **dadurch gekennzeichnet, dass** der Durchflusswandler eine primärseitige Hilfswicklung (W_H) umfasst und dass die während der Sperrphase des Schaltelements an dieser Hilfswicklung (W_H) anliegende Spannung zur netzseitigen Nachbildung der Lastspannung gemittelt wird.

3. Verfahren nach Anspruch 1 oder 2, **dadurch gekennzeichnet, dass** das Regelsignal (U_REG) einer Spannungsregelung des Durchflusswandlers einer Detektorschaltung (3) zugeführt wird und dass mittels Detektorschaltung (3) die Absenkung der Schaltfrequenz im Spannungsregelfall unterdrückt wird.

4. Schaltnetzteil zur Durchführung des Verfahrens nach einem der Ansprüche 1 bis 3, mit einem Durchflusswandler, welcher einen Transformator (T1) mit zumindest einer Primärwicklung (W_PR bzw. W_H) und zumindest ein primärseitiges Schaltelement umfasst, wobei das Schaltelement mit einer Steuerung verbunden ist **dadurch gekennzeichnet, dass** zur netzseitigen Nachbildung einer aktuellen Lastspannung die an der Primärwicklung (W_PR bzw. W_H) des Transformators während einer Sperrphase des Schaltelements anliegende Spannung einer Einrichtung (1) zur Mittelwertbildung zugeführt ist und dass ein Signal proportional der gemittelten Spannung einer Auswerteeinrichtung (2) zur Anpassung der Schaltfrequenz zugeführt ist.

5. Schaltnetzteil nach Anspruch 4, **dadurch gekennzeichnet, dass** der Transformator (T1) eine primärseitige Hauptwicklung (W_PR) und eine primärseitige Hilfswicklung (W_H) aufweist und dass die an der Hilfswicklung (W_H) während einer Sperrphase des Schaltelements anliegende Spannung der Einrichtung (1) zur Mittelwertbildung zugeführt ist.

6. Schaltnetzteil nach Anspruch 5, **dadurch gekennzeichnet, dass** ein Wicklungsende der Hilfswicklung (W_H) mit einem Masseanschluss (GND) des Schaltnetzteils verbunden ist.

7. Schaltnetzteil nach Anspruch 5, **dadurch gekennzeichnet, dass** ein Wicklungsende der Hilfswicklung (W_H) mit dem positiven Pol einer Hilfsspannung (U_H) verbunden ist und dass der negative Pol der Hilfsspannung (U_H) mit einem Masseanschluss (GND) des Schaltnetzteils verbunden ist und dass ein Pegelumsetzer angeordnet ist, welcher die an der Hilfswicklung (W_H) anliegende Spannung auf das Potenzial des Masseanschlusses (GND) umsetzt.

8. Schaltnetzteil nach einem der Ansprüche 4 bis 7, **dadurch gekennzeichnet, dass** die Steuerung einen Pulsbreitenmodulator umfasst, welcher einen Oszillatoreingang aufweist und dass dieser Oszillatoreingang mit dem Ausgangssignal (U_RC) der Auswerteeinrichtung (2) zur Anpassung der Schaltfrequenz beaufschlagt ist und dass die Auswerteeinrichtung (2) zur Anpassung der Schaltfrequenz über eine Detektorschaltung (3) zur Erkennung eines Spannungsregelfalls mit der Einrichtung (1) zur Mittelwertbildung verbunden ist.

9. Schaltnetzteil nach Anspruch 8, **dadurch gekennzeichnet, dass** die Einrichtung (1) zur Mittelwertbildung und die Auswerteeinrichtung (2) zur Anpassung der Schaltfrequenz als analoge Schaltungen ausgebildet sind.

10. Schaltnetzteil nach Anspruch 8, **dadurch gekennzeichnet, dass** die Einrichtung zur Mittelwertbildung (1) und die Auswerteeinrichtung (2) zur Anpassung der Schaltfrequenz einen digitaler Controller umfassen.

## Claims

1. Method for operating a switching power supply, which connects a load to a mains supply and comprises a forward converter, which is controlled with supply-side load current detection according to the current mode principle with a variable switching frequency, **characterised in that** a current load voltage is emulated on the supply side by averaging the voltage present on a primary winding (W_PR or W_H) of the forward converter during a blocking phase of a primary-side switching element, and that the switching frequency is lowered when the load voltage proportional to the averaged voltage falls below a predefined limit value.

2. Method according to claim 1, **characterised in that** the forward converter comprises a primary-side auxiliary winding (W_H) and that the voltage present at said auxiliary winding (W_H) during the blocking phase of the switching element is averaged to emulate the load voltage on the supply side.

3. Method according to claim 1 or 2, **characterised in that** the control signal (U_REG) of a voltage regulator of the forward controller is fed to a detector circuit (3) and that the lowering of the switching frequency is prevented by means of the detector circuit (3) in the event of voltage regulation.

4. Switching power supply for performing the method according to one of claims 1 to 3, with a forward converter which comprises a transformer (T1) with at least one primary winding (W_PR or W_H) and at least one primary-side switching element, wherein the switching element is connected to a controller, **characterised in that** in order to emulate a current load voltage on the supply side, the voltage present on the primary winding (W_PR or W_H) of the transformer during a blocking phase of the switching element is fed to a device (1) for averaging and that a signal is fed to an evaluation device (2) for adapting the switching frequency in proportion to the averaged voltage.

5. Switching power supply according to claim 4, **characterised in that** the transformer (T1) has a primary-side main winding (W_PR) and a primary-side auxiliary winding (W_H) and that the voltage present on the auxiliary winding (W_H) during a blocking phase of the switching element is fed to the device (1) for averaging.

6. Switching power supply according to claim 5, **characterised in that** a winding end of the auxiliary winding (W_H) is connected to an earth connection (GND) of the switching power supply.

7. Switching power supply according to claim 5, **characterised in that** a winding end of the auxiliary winding (W_H) is connected to the positive pole of an auxiliary voltage (U_H) and that the negative pole of the auxiliary voltage (U_H) is connected to an earth connection (GND) of the switching power supply and that a level converter is arranged which converts the voltage present on the auxiliary winding (W_H) to the potential of the earth connection (GND).

8. Switching power supply according to one of claims 4 to 7, **characterised in that** the controller comprises a pulse width modulator, which has an oscillator input and that the output signal (U_RC) of the evaluation device (2) for adapting the switching frequency is applied to said oscillator input and that the evaluation device (2) for adapting the switching frequency is connected to the device (1) for averaging via a detector circuit (3) for detecting an event of voltage regulation.

9. Switching power supply according to claim 8, **characterised in that** the device (1) for averaging and the evaluation device (2) for adapting the switching frequency are embodied as analogous circuits.

10. Switching power supply according to claim 8, **characterised in that** the device (1) for averaging and the evaluation device (2) for adapting the switching frequency comprise a digital controller.

## Revendications

1. Procédé de fonctionnement d'un bloc de découpage, qui relie une charge à un réseau de courant et comprend un convertisseur de débit excité par une détection de courant de charge côté réseau selon le principe de Current-Mode avec une fréquence de découpage variable, **caractérisé en ce qu'**une tension de charge actuelle est formée côté réseau, **en ce que** la tension présente sur un enroulement primaire (W_PR resp. W_H) du convertisseur de débit pendant la phase de blocage d'un élément de découpage côté primaire, est sujette à un calcul de moyenne, et **en ce que** la fréquence de découpage est abaissée quand la tension de charge proportionnelle à la tension moyenne tombe en dessous d'une valeur de seuil prédéterminée.

2. Procédé selon la revendication 1, **caractérisé en ce que** le convertisseur de débit comprend un enroulement auxiliaire (W_H) côté primaire et **en ce que** la tension présente sur cet enroulement auxiliaire (W_H) pendant la phase de blocage de l'élément de découpage est sujette à un calcul de moyenne pour la simulation côté réseau de la tension de charge.

3. Procédé selon la revendication 1 ou 2, **caractérisé en ce que** le signal de réglage (U_REG) d'un réglage de la tension du convertisseur de débit est conduit à un montage de détecteur (3) et **en ce que**, au moyen du montage de détecteur (3), la baisse de la fréquence de découpage en cas de réglage de la tension est supprimée.

4. Bloc de découpage pour l'exécution du procédé selon l'une des revendications 1 à 3, avec un convertisseur de débit, lequel comprend un transformateur (T1) avec au moins un enroulement primaire (W_PR resp. W_H) et au moins un élément de découpage côté primaire, l'élément de découpage étant relié à une commande, **caractérisé en ce que** pour la simulation côté réseau d'une tension de charge actuelle, la tension présente sur l'enroulement primaire (W_PR resp. W_H) du transformateur pendant la phase de blocage de l'élément de découpage est conduite à un dispositif (1) pour la création d'une valeur moyenne et **en ce qu'**un signal, proportionnellement à la tension moyenne calculée, est conduit à un dispositif d'évaluation (2) pour l'adaptation de la fréquence de découpage.

5. Bloc de découpage selon la revendication 4, **caractérisé en ce que** le transformateur (T1) présente un enroulement principal côté primaire (W_PR) et un enroulement auxiliaire côté primaire (W_H) et **en ce que** la tension présente sur l'enroulement auxiliaire (W_H) pendant la phase de blocage de l'élément de découpage est conduite au dispositif (1) pour l'établissement d'une valeur moyenne.

6. Bloc de découpage selon la revendication 5, **caractérisé en ce qu'**une extrémité d'enroulement de l'enroulement auxiliaire (W_H) est reliée à la masse (GND) du bloc de découpage.

7. Bloc de découpage selon la revendication 5, **caractérisé en ce qu'**une extrémité d'enroulement de l'enroulement auxiliaire (W_H) est relié au pôle positif d'une tension auxiliaire (U_H) et **en ce que** le pôle négatif de la tension auxiliaire (U_H) est relié à la masse (GND) du bloc de découpage et **en ce qu'**un convertisseur de niveau est agencé, lequel convertit la tension présente sur l'enroulement auxiliaire (W_H) sur le potentiel de la masse (GND).

8. Bloc de découpage selon l'une des revendications 4 à 7, **caractérisé en ce que** la commande comprend un modulateur de largeur d'impulsion, lequel présente une entrée d'oscillateur et **en ce que** cette entrée d'oscillateur est sollicitée avec le signal de sortie (U_RC) du dispositif d'évaluation (2) pour l'adaptation de la fréquence de découpage et **en ce que** le dispositif d'évaluation (2) est relié au dispositif (1) d'établissement d'une valeur moyenne pour l'adaptation de la fréquence de découpage par un montage de détecteur (3) pour la reconnaissance d'un cas de réglage de la tension.

9. Bloc de découpage selon la revendication 8, **caractérisé en ce que** le dispositif (1) d'établissement d'une valeur moyenne et le dispositif d'évaluation (2) pour l'adaptation de la fréquence de découpage sont réalisés sous forme de montages analogiques.

10. Bloc de découpage selon la revendication 8, **caractérisé en ce que** le dispositif d'établissement d'une valeur moyenne (1) et le dispositif d'évaluation (2) pour l'adaptation de la fréquence de découpage comprennent un contrôleur numérique.
